(19) Europäisches Patentamt
European Patent Office
Office européen des brevets

(11) **EP 4 259 578 B1**

(12) # EUROPEAN PATENT SPECIFICATION

(45) Date of publication and mention of the grant of the patent:
**01.01.2025 Bulletin 2025/01**

(21) Application number: **22751051.8**

(22) Date of filing: **13.07.2022**

(51) International Patent Classification (IPC):
***C01B 33/32*** (2006.01) ***B65D 81/38*** (2006.01)
***E04B 1/76*** (2006.01) ***C04B 28/26*** (2006.01)

(52) Cooperative Patent Classification (CPC):
(C-Sets available)
**C01B 33/325; C04B 28/26; C04B 38/009;**
C04B 2111/28 (Cont.)

(86) International application number:
**PCT/EP2022/069529**

(87) International publication number:
**WO 2023/285499 (19.01.2023 Gazette 2023/03)**

(54) **PROCESS FOR PRODUCING AN ARTICLE CONSISTING OF SILICEOUS MATERIAL, HAVING LOW DENSITY AND THERMAL CONDUCTIVITY, AND A MANUFACTURED ARTICLE THUS OBTAINED**

VERFAHREN ZUR HERSTELLUNG EINES ARTIKELS AUS SILIKATISCHEM MATERIAL MIT NIEDRIGER DICHTE UND WÄRMELEITFÄHIGKEIT UND SO HERGESTELLTER ARTIKEL

PROCÉDÉ DE FABRICATION D’UN ARTICLE CONSTITUÉ D’UN MATÉRIAU SILICEUX, AYANT UNE DENSITÉ ET UNE CONDUCTIVITÉ THERMIQUE FAIBLES, ET ARTICLE FABRIQUÉ AINSI OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2021 EP 21185544**

(43) Date of publication of application:
**18.10.2023 Bulletin 2023/42**

(73) Proprietor: **Qwarzo S.p.A.**
**25038 Rovato (IT)**

(72) Inventor: **PANZERI, Luca**
**23871 LOMAGNA (IT)**

(74) Representative: **Palladino, Saverio Massimo et al**
**Notarbartolo & Gervasi S.p.A.**
**Viale Achille Papa, 30**
**20149 Milano (IT)**

(56) References cited:
**JP-A- S49 107 008** **US-A- 3 839 226**
**US-A- 4 824 807**

- **DATABASE WPI Week 197507, Derwent World Patents Index; AN 1975-11584W, XP002805026, "Lightweight sodium silicate building material - granules are foamed by heating and resulting foams are sprayed with water"**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C04B 28/26, C04B 14/045, C04B 20/0024;**
**C04B 38/009, C04B 28/26, C04B 38/0067**

## Description

### FIELD OF THE INVENTION

The present invention relates to a process for manufacturing an article formed by a siliceous material, which has low density and thermal conductivity values and is suitable for manufacturing articles to replace similar products made of expanded polystyrene. The invention also relates to the manufactured articles obtained by the process.

### STATE OF THE ART

Polystyrene, or polystyrene foam, is a material that is widely used in many sectors due to its light weight and low thermal conductivity.

Polystyrene is a particularly economical material, as the expansion process only requires water vapour; the air inside the polystyrene as a result of the expansion process gives it its high thermal insulation characteristics, without reducing its mechanical properties.

This material has numerous applications: as well as being used for various types of packaging, it is widely used in the sea and in commercial and tourist ports, aquaculture, fishing and marine activities, for example for making buoys, floats and jetties.

One area in which the material can be widely used, again related to marine activities, is in the manufacture of crates for the storage, transport and display of fish in markets, which are typically made of polystyrene because this material allows long-term preservation of the ice on which the fish product is placed.

Fish crates are widely used in Europe, and very often they are not collected and recycled, and indeed very often they are thrown directly into the sea when they are too dirty or broken. In Italy alone, it is estimated that 10 million disposable polystyrene crates are consumed every year.

A major drawback of polystyrene is that it never fully biodegrades and can pose a serious threat to marine life and, consequently, to human health: in water, polystyrene tends to crumble, forming microplastics (plastic particles typically ranging in size from 0.1 micrometers to 5 millimetres) that are mistaken for food by marine fauna, and then enter the food chain all the way to humans.

It has been estimated that more than one million microplastics can be produced from a single fish crate once it is dispersed in the sea and begins its degradation process.

Another application in which large quantities of polystyrene foam are used is for thermal insulation layers in buildings; these layers may consist of panels, or else they may be formed by filling hollow spaces of walls with spherules of the material. Again polystyrene, both in form of panels and as free spherules, complicates disposal during building demolition or renovation work because it has to be separated from other rubble and landfilled separately to prevent its dispersion into the environment. In addition, another problem with the use of polystyrene in the building industry is that this material is not fire resistant, contrary to the requirements of new industry regulations.

In view of the recognised level of pollution from polystyrene, the first measures have already been taken regarding its use, and containers and cups made from this material have been banned.

The aim of the present invention is to make available a process for producing products which have lightness and thermal insulation characteristics similar to polystyrene and which can therefore be used as a substitute, but which do not present the pollution problems of polystyrene. Another purpose of the invention is to make available manufactured articles obtained by said process.

US3839226A relates to the preparation of low bulk density alkali metal silicate particles. JPS49107008 discloses a process for the preparation of silicate foams. JPS4969755A describes the preparation of sodium silicate foam granules.

### SUMMARY OF THE INVENTION

These purposes are achieved according to the present invention, which in a first aspect relates to a process for producing expanded sodium silicate spherules or a manufactured article formed by said spherules, comprising the following steps:

a) preparing a mixture comprising 15 to 70% by weight of a first component consisting of an acidic aqueous solution having a pH comprised between 1.0 and 2.6, and 30 to 85% by weight of a second component selected from an alkyl-trialkoxysilane and a mixture of an alkyl-trialkoxysilane and a tetraalkoxysilane, said acidic solution prepared by addition to distilled water of an acid selected from hydrochloric acid, nitric acid, chloric acid and perchloric acid;

b) allowing the mixture to react for at least 8 hours at a temperature comprised between 18 and 35 °C, obtaining a sol;

b') optionally, diluting the sol obtained in step b) with a C1-C6 alcohol or a mixture thereof;

c) dripping into the sol, maintained under gentle stirring, an aqueous sodium silicate solution having formula $(SiO_2)_x \cdot (Na_2O)_y$ wherein the ratio x/y may vary between 1.5 and 3.9, obtaining sodium silicate spherules at the bottom of the sol container;

d) removing the sol by filtration, recovering the sodium silicate spherules having the surface covered with a thin layer of sol;

e) subjecting the sodium silicate spherules having the surface covered with a thin layer of sol, obtained in step d), to a thermal treatment at a temperature

between 180 and 320 °C, keeping them separated, obtaining dry spherules of expanded sodium silicate; or, alternatively,

f) transferring the sodium silicate spherules having the surface covered with a thin layer of sol, obtained in step d), into a closed mould having the shape of the desired final article and bringing them into the mould at a temperature comprised between 180 and 320 °C, obtaining a manufactured article.

In a second aspect, the invention relates to a manufactured article obtained by the process described above.

## BRIEF DESCRIPTION OF THE DRAWINGS

Fig. 1 schematically shows a plant for carrying out the process of the invention.

## DETAILED DESCRIPTION OF THE INVENTION

In the description below, all percentages are by weight unless otherwise indicated.

In the first step of the invention, a), a mixture is prepared comprising a first component comprising an acidic aqueous solution and a second component selected from an alkyl-trialkoxysilane and a mixture between an alkyl-trialkoxysilane and a tetraalkoxysilane, in the ratios indicated above.

The aqueous solution with pH between 1.0 and 2.6 (first component) is prepared by addition to distilled water of an acid selected from hydrochloric acid, nitric acid, chloric acid and perchloric acid; preferably, these acids are added to the water in the form of their concentrated solutions. The pH can be checked in real time using a pH meter during the addition of the acid to the water. Alternatively, calibrated additions can be made to the water of solutions of these acids at known concentrations following preliminary tests; for example, the inventors have verified that pH values in the desired range can be obtained by adding solutions of these acids at a concentration of 1 N to distilled water at volume ratios of between 10:1 and 350:1 between the water and the acid solution. Preferably, the pH of the water solution (first component) is maintained at values between 1.5 and 2.3, which can be obtained by adding acid solutions of the cited acids at a concentration of 1 N to distilled water in volume ratios of 30:1 to 180:1 between the water and the acid solution.

The second component used in step a) is selected from an alkyl-trialkoxysilane and a mixture of an alkyl-trialkoxysilane and a tetraalkoxysilane.

Alkyl trialkoxysilanes are compounds of general formula (I):

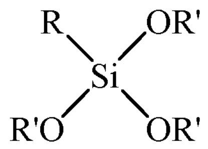

(I)

wherein R and R', equal or different from each other, are C1-C4 alkyl radicals.

The most common alkyl-trialkoxysilane, and preferred for the purposes of the present invention, is methyl-triethoxysilane (R = methyl, R' = ethyl), known in the industry by the abbreviation MTES.

Tetraalkoxysilanes are compounds of general formula (II):

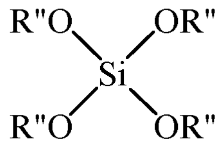

(II)

wherein the R" groups are C1-C4 alkyl radicals.

The most common tetraalkoxysilanes are tetramethoxysilane (R" = methyl), generally referred to by the abbreviation TMOS, tetraisopropoxysilane (R" = isopropyl) and, most importantly, tetraethoxysilane (R" = ethyl), commonly referred to by the abbreviation TEOS, which is preferred for the purposes of the present invention (when tetraalkoxysilane is present in the second component).

As mentioned above, the alkyl trialkoxysilane may constitute by itself the second component of the mixture of step a), in which case its amount may vary between 30 and 85% by weight of said mixture. If a mixture of an alkyl-trialkoxysilane and a tetraalkoxysilane is used as a second component, their ratio by weight may vary between 17:1 and 1:17.

Alkyl-trialkoxysilanes and tetraalkoxysilanes are compounds widely commercially available; the two preferred compounds for the purposes of the present invention are sold for example by Evonik Resource Efficiency GmbH, Essen (Germany) under the name Dynasylan® A (TEOS) and Dynasylan® MTES (MTES) or by the company Wacker Chemie Italia (Segrate, MI) under the name WACKER® SILICATE TES 28 (TEOS) and WACKER® SILANE M1-TRIETHOXY (MTES).

The two components (acidic aqueous solution and silane(s)) are introduced in the desired ratios into a container and in step b) of the process the mixture is allowed to react under stirring for at least 8 hours, preferably at least 12 hours, at a temperature between 18 and 35 °C. At this stage, hydrolysis of the silanes takes place, with the formation of a sol comprising water, hydrolysed silane compounds and the alcohol (or mixture

of alcohols) corresponding to the R, R' and possibly R" radicals of the initial silanes. The sol is kept under mild agitation, to avoid its gelling.

Optionally, upon completion of step b), a further step b') can be carried out, consisting in diluting the sol obtained in step b) with a C1-C6 alcohol, preferably a C1-C3 alcohol, more preferably an alcohol selected among methanol, ethanol, and isopropanol. The alcohol can be added in such an amount to constitute between 10% and 60%, preferably between 20% and 50% by weight, of the total weight of the sol obtained in step b'). Since the sodium silicate employed afterwards is insoluble in alcohols, the addition of an alcohol to the sol in step b') offers a further control parameter to the process, ensuring the non-coalescence of the spherules under formation in the following step c) even at higher sodium silicate/sol ratios; besides, since the sodium silicate solution is highly basic, it could induce the gelling of the sol into which it is dripped, and the inventors have observed that the addition of alcohols to the sol avoids or relents this gelation, allowing a longer operation time with the same sol.

The sol obtained in step b) or in step b') can be kept in the container in which it was formed if this is suitable for carrying out steps c) and d) of the process or transferred to a suitable reactor.

In step c), an aqueous solution of sodium silicate of formula $(SiO_2)_x \cdot (Na_2O)_y$ in which the x/y ratio can vary between 1.5 and 3.9 is dripped into the sol. Aqueous sodium silicate solutions of varying compositions are widely known in inorganic chemistry (often referred to as "water glass") and are used in numerous sectors, for example in agriculture, construction, the ceramics industry and as an ennobling agent and adhesive in paper. These solutions are widely available commercially; in Italy, for example, they are sold by the company Ingessil s.r.l. of Montorio (Verona, Italy), in a line of products called Nacoren. These solutions differ from each other in the molar ratio between $SiO_2$ and $Na_2O$ and in the concentration of the inorganic components in water, which may vary between 25% and 58% by weight of sodium silicate (intended as the sum $SiO_2$ and $Na_2O$), leading to densities varying between approximately 1.25 and 1.56 g/ml, and have a pH ranging from 10 to 13.5. All these solutions are suitable for the purposes of the present invention: solutions with a higher concentration of inorganics are preferred for productivity reasons.

The aqueous sodium silicate solution may optionally be added with glycerol and/or coloring agents.

The inventors have observed that the addition of small amounts of glycerol to the sodium silicate aqueous solution gives rise to an enhancement of the expansion of the final spherules. Glycerol may be added to the sodium silicate aqueous solution in such an amount to constitute between 0.5% and 3%, preferably between 1% and 2.5% by weight of said solution; the increase in volume of the final spherules obtained with the addition of these amounts of glycerol can reach up to 20% compared to the volume of spherules obtained without the use of glycerol.

Coloring agents for addition to the aqueous sodium silicate solution can selected in a wide range of compounds; for instance, it is possible to use a food coloring (in form of powder, liquid or gel), acryl or vinyl dyes, or water-based dyes (for instance, those produced and sold by Siegwerk Italy SpA, Oleggio (Novara), Italy). These coloring agents are added in amounts sufficient to obtain the desired color intensity in the final article, that can be determined with a few preliminary tests; generally, the desired results are obtained adding coloring agents in such an amount to constitute between 0.5% and 2% by weight of the aqueous sodium silicate solution (both in case glycerol is also added, and in case this latter component is not added).

For dripping the aqueous sodium silicate solution into the sol, it is preferable to use a silicone dripper, which prevents the viscous liquid from sticking. The drip head can be made in many ways, for example it can be a silicone tube wound in a spiral on a support and perforated along its entire length, or sections of silicone tube of equal size, also perforated, arranged in a radial pattern around a central support. The sodium silicate solution is forced out of the holes in the silicone tubes by overpressure, achieved by means of a pump.

The sodium silicate solution in contact with the sol immediately coagulates into small spheres (spherules), due to the combined action of the pH difference (sodium silicate solutions have a pH ranging between 10 and 12.5, whereas the sol is acidic) and the presence of alcohol in the sol, in which sodium silicate is insoluble. The spherules have variable dimensions, which can be controlled by adjusting the size of the holes in the silicone tubes and the pressure exerted on the liquid by the pump. Typically, the spherules have a diameter comprised between 0.5 and 5 mm, most commonly between 1 and 3 mm. In some cases, the drops of sodium silicate solution, due to the impact with the sol during dripping, break up to form spherules of about 0.1 mm in size; these are normally removed with the sol in filtration step d).

The spherules have a higher density than the sol and therefore settle on the bottom of the reactor by gravity. To prevent them from compacting, the sol is kept gently stirred, for example by a mechanical stirrer or magnetic anchor. In order not to impair the spherule formation process, the stirrer should rotate at a moderate speed of between 30 and 80 rpm, preferably around 60 rpm.

In step d) of the process, the spherules are separated from the sol by filtration. For this purpose, the portion of the sol volume containing the spherules is transferred to a second container which has a filter at its lower surface. The filter retains the spherules but allows the sol to flow out. Sol leaving the second container is preferably sent to a recovery tank and from there recirculated to step a). To aid this step, a gas (preferably nitrogen) is preferably flowed into the second container to help transport the liquid phase.

In this step, the sol is almost completely separated from the spherules, except for a very small amount that remains in the form of a thin film that wets the surface of the spherules.

Finally, in the last step of the process, the spherules derived from step d) are thermally treated, keeping them separated (step e) or in contact in a mould (step f), causing their expansion.

In the first option, step e) is carried out, in which the spherules are subjected to a thermal treatment between 180 and 320 °C, keeping them separated, to obtain discrete expanded spherules as the final product. The heat treatment causes the spherules to expand due to the development of gas (air and water vapour) contained in the starting material.

The spherules can be loaded onto trays or a conveyor belt, preferably provided with recesses or holes with diameter lower than the diameter of the spherules, to aid keeping the spherules in place and spaced apart during movement of the tray or belt.

The heating of the spherules can be achieved employing for instance a tunnel oven in case of transport with a conveyor belt, or with a microwave oven or with infrared lamps in case of spherules transported on conveyor belt and on trays. Other ways of transporting the spherules into the heated zone of an oven, or other heating means, will be apparent to the skilled person.

These spherules are not part of the present invention.

In the second, alternative option, in the final step of the process a manufactured article is produced.

In this option, in step f) the sodium silicate spherules with a thin layer of sol on their surface are transferred to a closed mould having the shape of the desired final manufactured article. The mould can be filled in various ways, e.g., by gravity or injection, depending on the type of mould. The mould normally consists of two halves, a lower part which forms the initial container into which the spherules are transferred, and a counter-mould which is held in the desired position against the spherules by a press, forming the complete mould. The two parts of the mould are preferably covered with paper, which serves to keep the product compact and, once the process is over, will be useful to protect the inside of the manufactured article, comprised of the dried spheres.

The closed mould is then heated to a temperature comprised between 180 and 320 °C; the duration of the heat treatment is typically between 2 and 15 minutes and is shorter the higher the temperature and the lower the thickness defined by the mould.

The heat treatment causes the spherules to expand due to the development of gas (air and water vapour) contained in the starting material; the expansion of the spherules causes them to compact and leads to the formation of a manufactured article that occupies the entire space inside the mould; during this operation the compression of the press is maintained.

After the heat treatment, the mould is opened, recovering the finished manufactured article.

Fig. 1 schematically shows an example of a possible plant for implementing steps c), d) and f) of the process.

The plant, 10, consists of the reactor 11, in which the sol prepared in steps a) and b) is produced or transferred. In an upper wall of the reactor 11 there is a dripper 12, through which the sodium silicate solution is dripped into the sol. A stirrer, 13, is immersed in the sol to keep the formed spherules (shown in the figure as element 14) in motion and prevent them from packing and compacting on the bottom of the reactor.

The bottom of the reactor 11 is connected to a discharge line on which there is a shutoff valve 15, which is kept closed during the performance of step c), and is opened for the performance of step d). By opening the valve 15, the part of the volume of sol in which the spherules are present is passed into the second container 16; at the bottom of the second container there is a filter, 17, which allows the flow of sol but retains the spherules (the spherules in the second container are identified as element 14'). On the discharge line from the second container, downstream of the filter 17, there is a diverter valve 18 which, during the discharge of sol from the second container, directs it towards the recovery tank 19, from which the sol is then recirculated to the reactor 11 by means of a pump. The emptying of the container 16 from the sol is facilitated by having nitrogen flow into the container itself from the appropriate inlet duct (indicated in the figure by the wording "$N_2$ in"); the slight overpressure created by the influx of nitrogen is discharged when the spherules are dropped into the mould 20; for greater safety, it is also possible to provide for the presence of a release valve (not indicated in the figure) at the top of the container 16.

Once the emptying of the container 16 is complete, the filter 17 is removed and the valve 18 is moved to a position where the spherules fall into the lower part of the mould, 20, for carrying out step f).

The picture does not show the counter-mould and press used during the heat treatment of expansion and compaction of the spheres in step f).

In a second aspect, the invention relates to a manufactured article obtained by the process described above.

The material of the invention has a similar appearance to polystyrene, is white, light (density values between 0.21 and 0.22 g/$cm^3$) and has a thermal insulation coefficient of about 0.030 W/mK, essentially equal to that of expanded polystyrene; unlike expanded polystyrene, however, the products of the invention (manufactured articles) have better mechanical stability with increasing temperature (expanded polystyrene has a softening T in the range between 70 and 100 °C), they are not flammable and, above all, they dissolve completely when immersed in water for a long time without giving rise to environmental pollution problems.

The invention will be further illustrated by the

following examples.

## EXAMPLE 1

This example refers to the production of an article of the invention in the form of a disc having a diameter of 50 mm and a thickness of 10 mm.

90 kg MTES (Evonik), 90 kg TEOS (Evonik), 60 L distilled water and 1 L of a 1 N HCl solution were introduced into a container. The resulting mixture was left to react during stirring at room temperature (approximately 21 °C) for 12 hours. During this time, the silane components are hydrolysed, resulting in a sol.

The sol was transferred to a reactor equipped with a magnetic anchor stirrer.

A commercial sodium silicate aqueous solution having concentration 36% by weight, in which the sodium silicate had formula $(SiO_2)_x \cdot (Na_2O)_y$ with x/y = 3.4 (Nacoren 330F, Ingessil s.r.l.), was slowly dripped into the sol.

The dripping was achieved by pumping the sodium silicate solution, at a pressure of 1.55 bar, into a perforated silicone tube (2 mm diameter holes) placed at the top of the reactor approximately 10 cm from the free surface of the sol, so as to avoid as far as possible the formation of small spherules caused by the "bouncing" of the sodium silicate solution in contact with the sol; the silicone tube was wound in a spiral around a support. The sol was kept stirred by means of a magnetic anchor rotating at 60 rpm. On contact with the sol, the drops of sodium silicate solution formed liquid spherules immiscible in and dispersed in the sol, having a diameter comprised between 1 and 3 mm, which were deposited on the bottom of the reactor.

The spherules were discharged from the bottom of the reactor into a tank below, where excess sol was removed from the surface of the spherules by a flow of nitrogen at a pressure of 0.2 bar.

The spherules thus obtained were then discharged, through the opening of a discharge valve at the bottom of the tank, into the lower part of a cylindrical mould with a thickness of 10 mm and a diameter of 50 mm; when the level of the spherules reached the edge of the lower part of the mould, this was closed with a counter-mould and the complete mould was placed in a ventilated oven at a temperature of 250 °C for a period of 5 minutes.

After heat treatment, the manufactured article was extracted from the mould, thus obtaining the finished product (Sample 1). The weight of the manufactured product was measured and found to be 4.28 g, with a bulk density of 0.218 g/cm$^3$.

## EXAMPLE 2

In the test of this example, the thermal conductivity of Sample 1 produced in Example 1 was measured.

The measurement of thermal conductivity was carried out following the procedure of UNI EN 12667:2001.

Briefly, in this procedure the sample is placed between a heating element and a cooling element; the heating element consists of a central measuring element and a guard ring maintained at the same temperature as the central element, so that a one-dimensional heat flow is generated through the test sample.

The thermal conductivity is provided by the following relationship:

$$\lambda = P \times s / A(T_c - T_f)$$

wherein:

- P = electrical power dissipated by the central element (W);
- s = thickness of the test sample (m);
- A = area of the central element (m$^2$);
- ($T_c$ - Tf) = temperature difference (K) between the hot surface and the cold surface of the test sample.

A LASERCOMP FOX 300 instrument (TA Instruments®) was used for the test. The test was conducted under the following laboratory conditions: temperature 22 ± 3 °C, relative humidity 50 ± 10%.

The measured thermal conductivity value was 0.031 W/mK.

## EXAMPLE 3

The preparation of Example 1 was repeated under identical conditions, but with three different compositions of the alkyl-trialkoxysilane/tetraalkoxysilane component used to make the sol.

In the three cases, the amounts of MTES and TEOS were as follows:

| Sample | MTES (kg) | TEOS (kg) |
|---|---|---|
| 2 | 170 | 10 |
| 3 | 10 | 170 |
| 4 | 180 | / |

The bulk density was measured on Samples 2-4 and was similar to that measured on Sample 1.

## EXAMPLE 4

This example refers to the formation of a colored product, obtained by adding a pink food coloring to liquid sodium silicate.

In a container, 90 kg of MTES (Evonik) were

reacted with 60 kg of $H_2O$ acidified with 1 kg 1 N hydrochloric acid.

The mixture was left under stirring for 12 hours, obtaining a sol.

60 kg of an alcohol mix was added to the sol, and the resulting mixture was kept under gentle stirring; the alcohol mix was a commercial blend comprising, by weight, about 75% ethanol and about 25% isopropanol.

The same Nacoren 330F aqueous sodium silicate solution employed in Example 1 was used as source of sodium silicate. This solution was colored by addition of a liquid pink food coloring (product Decora, code 9600503, sold by Karma S.r.l. of Salerno, Italy), in a percentage of 0.6% b.w.

The formulation of this type of dye also includes glycerol: this component, as already mentioned, helps to increase the expanding capability of the material.

The colored sodium silicate solution was then made to drip inside the diluted sol as described in Example 1, using a perforated silicone spiral into which the material was pumped with a pressure of 1.5 bar.

Once the desired quantity of spherules had been obtained, 24 g of these were discharged from the bottom of the reactor into a tank and the excess sol was removed from the surface of the spherules by a flow of nitrogen at a pressure of 0.2 bar.

The thus produced spherules were inserted inside a semi-closed Teflon-coated mold, which means that a lid is laid over the lower half of the mold, but the mold is not sealed; the mold had a square geometry, with lateral size 10x 10 cm. The mold was placed inside an industrial microwave oven, in which the drying and expansion process took place.

Once drying was complete, the product was extracted from the Teflon-coated mold: a 10x10x2 cm panel of pink colored silicate foam was obtained.

## EXAMPLE 5 (COMPARATIVE)

This example refers to the production of discrete, separate spherules of expanded sodium silicate.

In a container 90 kg of MTES (Evonik) were reacted with 60 kg of $H_2O$ acidified with 1 kg 1 N hydrochloric acid.

The mixture was left under stirring for 12 hours, obtaining a sol.

The same aqueous sodium silicate solution employed in Example 4 (Nacoren 330F) was made to drip inside the sol using a manifold system comprising 8 perforated silicone branches; sodium silicate was pumped into these branches of perforated pipe, with a pressure of 1.5 bar.

The spherules formed in the previous step were recovered and the excess sol was removed as described in Example 1. The spherules were placed on a Teflon-coated carpet, taking care to keep them spread on the carpet and separated from one another. The carpet crossed a hot air tunnel at 280 °C in 10 minutes, causing the drying and expansion of the spherules.

Once the thermal treatment was over, the spherules were discharged into a container intended for the storage of the material. These spherules were non-sticky and ready for use in filling hollow spaces to act as thermal insulation.

## Claims

1. Process for producing expanded sodium silicate spherules or a manufactured article formed by said spherules, comprising the following steps:

    a) preparing a mixture comprising 15 to 70% by weight of a first component consisting of an acidic aqueous solution having a pH comprised between 1.0 and 2.6, and 30 to 85% by weight of a second component selected from an alkyl-trialkoxysilane and a mixture of an alkyl-trialkoxysilane and a tetraalkoxysilane, said acidic solution prepared by addition to distilled water of an acid selected from hydrochloric acid, nitric acid, chloric acid and perchloric acid;
    b) allowing the mixture to react for at least 8 hours at a temperature comprised between 18 and 35 °C, obtaining a sol;
    b') optionally, diluting the sol obtained in step b) with a C1-C6 alcohol or a mixture thereof;
    c) dripping into the sol, maintained under gentle stirring, an aqueous sodium silicate solution having formula $(SiO_2)_x \cdot (Na_2O)_y$ wherein the ratio x/y may vary between 1.5 and 3.9, obtaining sodium silicate spherules at the bottom of the sol container;
    d) removing the sol by filtration, recovering the sodium silicate spherules having the surface covered with a thin layer of sol;
    e) subjecting the sodium silicate spherules having the surface covered with a thin layer of sol, obtained in step d), to a thermal treatment at a temperature between 180 and 320 °C, keeping them separated, obtaining dry spherules of expanded sodium silicate;
    or, alternatively,
    f) transferring the sodium silicate spherules having the surface covered with a thin layer of sol, obtained in step d), into a closed mould having the shape of the desired final article and bringing them into the mould at a temperature comprised between 180 and 320 °C, obtaining a manufactured article.

2. Process according to claim 1, wherein the alkyl-trialkoxysilane used in step a) has general formula (I):

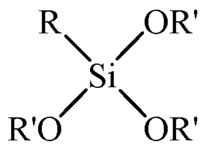

(I)

wherein R and R’, equal or different from each other, are C1-C4 alkyl radicals.

**3.** Process according to claim 2, wherein said alkyl-trialkoxysilane is methyl-triethoxysilane.

**4.** Process according to any one of the preceding claims, wherein the tetraalkoxysilane optionally employed in step a) has general formula (II):

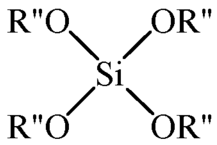

(II)

wherein the R" groups are C1-C4 alkyl radicals.

**5.** Process according to claim 4, wherein said tetraalkoxysilane is tetraethoxysilane.

**6.** Process according to any one of the preceding claims, wherein when a mixture between an alkyltrialkoxysilane and a tetraalkoxysilane is used in step a), their ratio by weight is between 17:1 and 1:17.

**7.** Process according to any one of the preceding claims wherein, when optional step b’) is carried out, the alcohol or mixture of alcohols is added in such an amount to constitute between 10% and 60% of the total weight of the sol obtained in step b’).

**8.** Process according to any one of the preceding claims, wherein the aqueous sodium silicate solution dripped into the sol in step c) further contains glycerol in such an amount to constitute between 0.5% and 3% of said aqueous sodium silicate solution.

**9.** Process according to any one of the preceding claims, wherein the aqueous sodium silicate solution dripped into the sol in step c) further contains one or more coloring agents in such an amount to constitute between 0.5% and 2% by weight of said aqueous sodium silicate solution.

**10.** Process according to any one of the preceding claims, wherein gentle stirring of the sol of step c) is achieved by a mechanical or magnetic stirrer, which rotates at a speed of between 30 and 80 rpm.

**11.** Manufactured article obtained in step f) of the process of any one of claims 1 to 10, having a density comprised between 0.21 and 0.22 g/cm$^3$.

**Patentansprüche**

**1.** Verfahren zur Herstellung von expandierten Natriumsilikatkügelchen oder eines aus den Kügelchen gebildeten hergestellten Artikels, umfassend die folgenden Schritte:

a) Zubereiten einer Mischung, die 15 bis 70 Gew.-% einer ersten Komponente, die aus einer sauren wässrigen Lösung mit einem pH-Wert zwischen 1,0 und 2,6 besteht, und 30 bis 85 Gew.-% einer zweiten Komponente umfasst, die aus einem Alkyltrialkoxysilan und einer Mischung aus einem Alkyltrialkoxysilan und einem Tretraalkoxysilan ausgewählt ist, wobei die saure Lösung durch Zugabe einer Säure, ausgewählt aus Salzsäure, Salpetersäure, Chlorsäure und Perchlorsäure, zu destilliertem Wasser hergestellt wird;
b) Zulassen, dass die Mischung mindestens 8 Stunden lang bei einer Temperatur zwischen 18 und 35 °C reagiert, um ein Sol zu erhalten;
b’) gegebenenfalls Verdünnen des in Schritt b) erhaltenen Sols mit einem C1-C6-Alkohol oder einer Mischung davon;
c) Zutropfen einer wässrigen Natriumsilikatlösung mit der Formel $(SiO_2)_x \cdot (Na_2O)_y$ zu dem Sol, das unter leichtem Rühren gehalten wird, wobei das Verhältnis x/y zwischen 1,5 und 3,9 variieren kann, wodurch Natriumsilikatkügelchen am Boden des Solbehälters erhalten werden;
d) Entfernen des Sols durch Filtration, wodurch die Natriumsilikatkügelchen gewonnen werden, deren Oberfläche mit einer dünnen Schicht aus Sol bedeckt ist;
e) Unterziehen der in Schritt d) erhaltenen Natriumsilikatkügelchen, deren Oberfläche mit einer dünnen Schicht aus Sol bedeckt ist, einer Wärmebehandlung bei einer Temperatur zwischen 180 und 320 °C, wobei sie getrennt gehalten werden und trockene Kügelchen aus expandiertem Natriumsilikat erhalten werden;
oder alternativ
f) Überführen der in Schritt d) erhaltenen Natriumsilikatkügelchen, deren Oberfläche mit einer dünnen Schicht aus Sol bedeckt ist, in eine geschlossene Form, die die Form des gewünschten Endartikels aufweist, und Einbringen in die Form bei einer Temperatur zwischen 180 und 320 °C, wodurch ein hergestellter Artikel erhalten wird.

2. Verfahren nach Anspruch 1, wobei das in Schritt a) verwendete Alkyltrialkoxysilan die allgemeine Formel (I) aufweist:

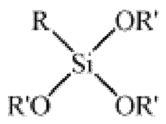

(I)

wobei R und R', die gleich oder voneinander verschieden sind, C1-C4-Alkylreste sind.

3. Verfahren nach Anspruch 2, wobei das Alkyltrialkoxysilan Methyltriethoxysilan ist.

4. Verfahren nach einem der vorhergehenden Ansprüche, wobei das gegebenenfalls in Schritt a) eingesetzte Tretraalkoxysilan die allgemeine Formel (II) aufweist:

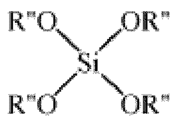

(II)

wobei die R"-Gruppen C1-C4-Akylreste sind.

5. Verfahren nach Anspruch 4, wobei das Tretraalkoxysilan Tetraethoxysilan ist.

6. Verfahren nach einem der vorhergehenden Ansprüche, wobei, wenn in Schritt a) eine Mischung aus einem Alkyltrialkoxysilan und einem Tetraalkoxysilan verwendet wird, deren Gewichtsverhältnis zwischen 17 : 1 und 1 : 17 liegt.

7. Verfahren nach einem der vorhergehenden Ansprüche, wobei, wenn der optionale Schritt b') durchgeführt wird, der Alkohol oder die Mischung aus Alkoholen in einer solchen Menge zugegeben wird, dass sie zwischen 10 % und 60 % des Gesamtgewichts des in Schritt b') erhaltenen Sols ausmacht.

8. Verfahren nach einem der vorhergehenden Ansprüche, wobei die wässrige Natriumsilikatlösung, die in Schritt c) in das Sol eingetropft wird, ferner Glycerin in einer solchen Menge enthält, dass sie zwischen 0,5 % und 3 % der wässrigen Natriumsilikatlösung ausmacht.

9. Verfahren nach einem der vorhergehenden Ansprüche, wobei die wässrige Natriumsilikatlösung, die in Schritt c) in das Sol eingetropft wird, ferner einen oder mehrere Farbstoffe in einer solchen Menge enthält, dass sie zwischen 0,5 und 2 Gew.-% der wässrigen Natriumsilikatlösung ausmacht.

10. Verfahren nach einem der vorhergehenden Ansprüche, wobei das leichte Rühren des Sols in Schritt c) durch einen mechanischen oder Magnetrührer durchgeführt wird, der sich bei einer Drehzahl zwischen 30 und 80 U/min dreht.

11. Hergestellter Artikel, der in Schritt f) des Verfahrens nach einem der Ansprüche 1 bis 10 erhalten wird und eine Dichte zwischen 0,21 und 0,22 g/cm$^3$ aufweist.

**Revendications**

1. Procédé de production de sphérules de silicate de sodium expansé ou d'un article manufacturé formé par lesdites sphérules, comprenant les étapes suivantes :

a) préparer un mélange comprenant 15 à 70 % en poids d'un premier composant constitué d'une solution aqueuse acide ayant un pH compris entre 1,0 et 2,6, et 30 à 85 % en poids d'un deuxième composant choisi parmi un alkyl-trialcoxysilane et un mélange d'un alkyl-trialcoxysilane et d'un tétraalcoxysilane, ladite solution acide préparée par addition à de l'eau distillée d'un acide choisi parmi l'acide chlorhydrique, l'acide nitrique, l'acide chlorique et l'acide perchlorique ;
b) laisser réagir le mélange pendant au moins 8 heures à une température comprise entre 18 et 35 °C, en obtenant un sol ;
b') éventuellement, diluer le sol obtenu à l'étape b) avec un alcool C1-C6 ou un mélange de celui-ci ;
c) égoutter dans le sol, maintenu sous agitation douce, une solution aqueuse de silicate de sodium de formule $(SiO_2)x \cdot (Na_2O)_y$ dans laquelle le rapport x/y peut varier entre 1,5 et 3,9, en obtenant des sphérules de silicate de sodium au fond du récipient de sol ;
d) éliminer le sol par filtration, récupérer les sphérules de silicate de sodium dont la surface est recouverte d'une fine couche de sol ;
e) soumettre les sphérules de silicate de sodium dont la surface est recouverte d'une fine couche de sol, obtenues à l'étape d), à un traitement thermique à une température comprise entre 180 et 320 °C, les maintenir séparées, obtenir des sphérules sèches de silicate de sodium expansé ;
ou, alternativement,

f) transférer les sphérules de silicate de sodium dont la surface est recouverte d'une fine couche de sol, obtenue à l'étape d), dans un moule fermé ayant la forme de l'article final souhaité et les amener dans le moule à une température comprise entre 180 et 320 °C, pour obtenir un article manufacturé.

**2.** Procédé selon la revendication 1, dans lequel l'alkyl-trialcoxysilane utilisé dans l'étape a) répond à la formule générale (I) :

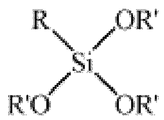

(I)

dans laquelle R et R', égaux ou différents l'un de l'autre, sont des radicaux alkyles C1-C4.

**3.** Procédé selon la revendication 2, dans lequel ledit alkyl-trialcoxysilane est le méthyl-triéthoxysilane.

**4.** Procédé selon l'une quelconque des revendications précédentes, dans lequel le tétraalcoxysilane éventuellement utilisé à l'étape a) répond à la formule générale (II) :

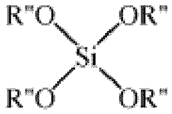

(II)

dans lequel les groupes R" sont des radicaux alkyles C1-C4.

**5.** Procédé selon la revendication 4, dans lequel ledit tétraalcoxysilane est le tétraéthoxysilane.

**6.** Procédé selon l'une quelconque des revendications précédentes, dans lequel lorsqu'un mélange entre un alkyl-trialcoxysilane et un tétraalcoxysilane est utilisé dans l'étape a), leur rapport pondéral est compris entre 17:1 et 1:17.

**7.** Procédé selon l'une quelconque des revendications précédentes, dans lequel, lorsque l'étape facultative b') est mise en oeuvre, l'alcool ou le mélange d'alcools est ajouté en une quantité telle qu'elle constitue entre 10 % et 60 % du poids total de sol obtenu à l'étape b').

**8.** Procédé selon l'une quelconque des revendications précédentes, dans lequel la solution aqueuse de silicate de sodium égouttée dans le sol à l'étape c) contient en outre du glycérol en une quantité telle qu'elle constitue entre 0,5 % et 3 % de ladite solution aqueuse de silicate de sodium.

**9.** Procédé selon l'une quelconque des revendications précédentes, dans lequel la solution aqueuse de silicate de sodium égouttée dans le sol à l'étape c) contient en outre un ou plusieurs agents colorants en une quantité telle qu'elle constitue entre 0,5 % et 2 % en poids de ladite solution aqueuse de silicate de sodium.

**10.** Procédé selon l'une quelconque des revendications précédentes, dans lequel l'agitation douce du sol de l'étape c) est obtenue par un agitateur mécanique ou magnétique, qui tourne à une vitesse comprise entre 30 et 80 tr/min.

**11.** Article manufacturé obtenu à l'étape f) du procédé selon l'une quelconque des revendications 1 à 10, ayant une densité comprise entre 0,21 et 0,22 g/$cm^3$.

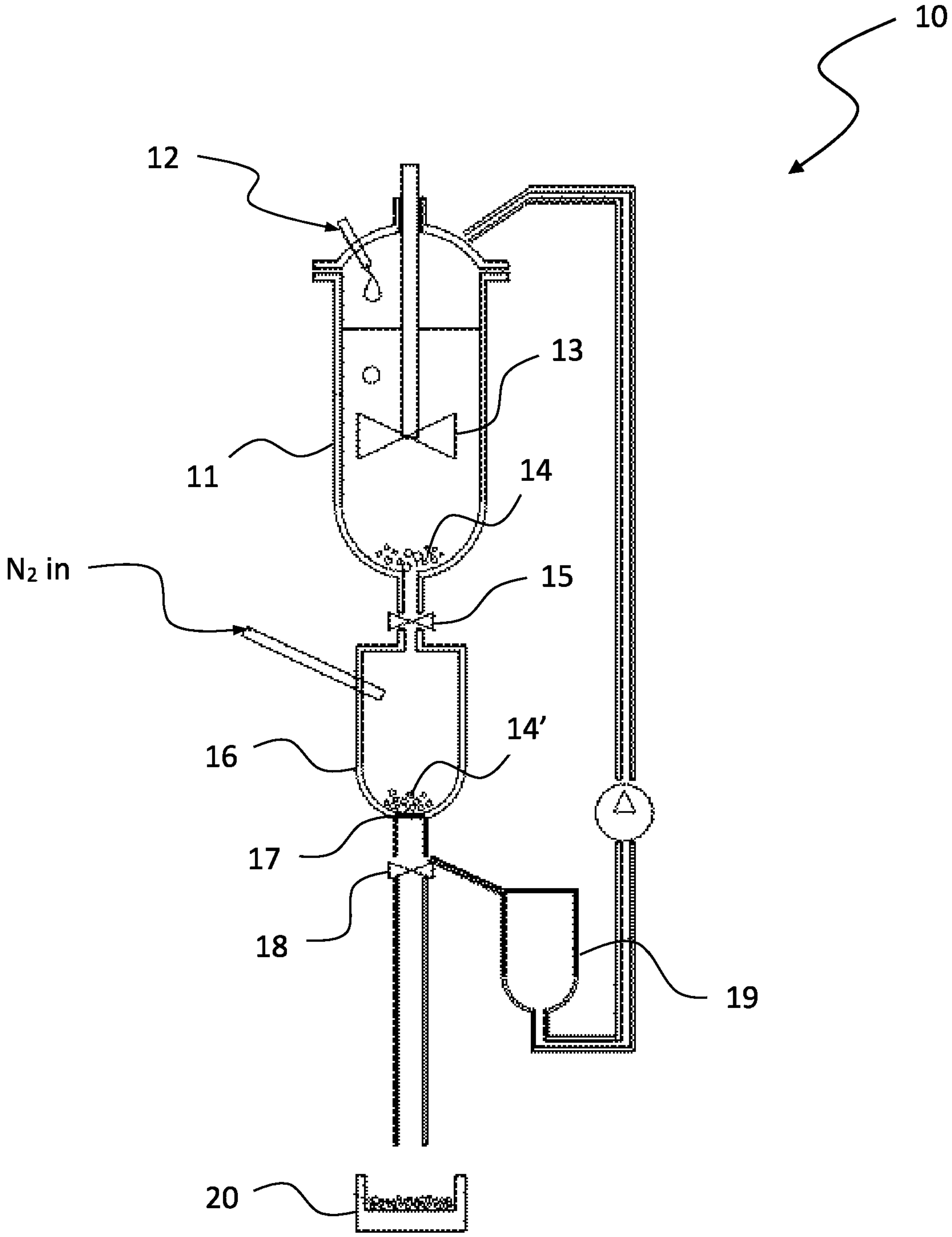


*Fig. 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3839226 A
- JP S49107008 B
- JP S4969755 A